# EUROPEAN PATENT APPLICATION

(11) **EP 1 170 806 A1**
(43) Date of publication of application: **09.01.2002**
(21) Application number: 01202633.2
(22) Date of filing: 09.07.2001
(51) Int. Cl.: H01L 31/042, E04D 13/18

(54) **Weatherproofing assembly for weatherproofing between tiles on a tile roof**

(30) Priority: 07.07.2000 NL 1015654
(71) Applicant: Lafarge Dakprodukten B.V., 3417 ZG Montfoort (NL)
(72) Inventor: Verboom, Bastian Maarten, 6999 AL Hummelo (NL)
(74) Representative: Jorritsma, Ruurd

(57) **Abstract**

The invention relates to a weatherproofing assembly for weatherproofing between tiles on a tile roof. The weatherproofing assembly comprises a first side channel part and a second side channel part and at least one intermediate part that can be placed between side channel parts. The intermediate part is provided with two longitudinal side zones, one of which longitudinal side zones is provided on the underside with one or more grooves, and the other longitudinal side zone is provided on the top side with one or more ribs that are complementary to the grooves, all the above in such a way that the ribs of the longitudinal side zone of one intermediate part can engage in the bottom of the groove of the longitudinal side zone of another intermediate part. The side channel parts also each have a longitudinal side area. The one side channel part has a longitudinal side area which on the underside has a groove, which grooves are complementary to the ribs on the intermediate part, and the other side channel part has a longitudinal side area with ribs that are complementary to the grooves in the intermediate part.

## Description

The present invention relates to a weatherproofing assembly for weatherproofing between tiles on a tile roof. The present invention relates in particular to a weatherproofing assembly for weatherproofing panels to be fixed on the roof between tiles on a tile roof, such as in particular panels for solar collectors, solar cells, photovoltaic systems etc.

From an aesthetic point of view, it is preferable in the case of such panels if said panels can be fitted so that they are recessed between the tiles on the tile roof. However, the problem that occurs here is that the tiles commonly available in practice have very varying dimensions, while the panels to be recessed between them, such as solar collector panels, solar cell panels, photovoltaic systems etc. have a more or less standard measurement. As a result of this, the edges of such panels in one case will butt up more closely against the tiles than in another case. Since leakage must not, of course, occur through the roof when the abovementioned panels are placed on the roof, it is important when recessing such panels between the tiles to use so-called weatherproofing sections, of the type also used, for example, around roof windows to be placed in a pitched roof face. The difference from roof windows is, however, that in the case of the earlier mentioned type of panels the weatherproofing section has to extend all the way through underneath the entire panel, in order to ensure that the roof is leakproof over the entire area covered by the panel recessed between the tiles. All this means that in practice when placing such panels a great deal of time and energy has to be spent on fitting a so-called weatherproofing unit, which in fact consists of a waterproof sheathing extending underneath the entire panel or panel assembly to be recessed between the tiles. Although the panels to be recessed between the tiles will have substantially standard dimensions, the sheathing to be placed underneath them will not be able to have a standard dimension because of the great diversity of dimensions in commonly used roof tiles. All this means that the placing of the sheathing is a labour-intensive and consequently also a time-consuming operation. This is particularly undesirable because work being carried out on a pitched roof is generally not entirely devoid of risk. It is common practice to fit sheathing material that has to be accurately cut to size and, if it is composed of several pieces, these must be joined together. Examples are the fitting of a large piece of sheathing plastic or possibly a large lead slab.

The object of the present invention is to provide a weatherproofing assembly for weatherproofing between tiles on a tile roof, in particular to be used for providing a waterproof sheathing underneath panels at least partially recessed between the roof tiles, such as solar collector panels and/or solar cell panels or substantially non-transparent panels, which weatherproofing assembly can be placed particularly quickly and efficiently and can be adapted to roof tiles of varying dimensions.

This object is achieved according to the invention by providing a weatherproofing assembly for weatherproofing between tiles on a tile roof, comprising a first side channel part, a second side channel part, and at least one intermediate part that can be placed between the side channel parts, the intermediate part being a substantially rectangular sheet part with a first longitudinal side zone, and a second longitudinal side zone lying opposite it, the first longitudinal side zone being provided on the underside with at least one groove extending in the longitudinal direction, and the second longitudinal side zone being provided on the top side with at least one rib, and all the above being provided in such a way that the first longitudinal side zone of a first intermediate part can at least partially overlap the second longitudinal side zone of a second intermediate part substantially identical to the first intermediate part, while the at least one rib of the second intermediate part projects into the at least one groove of the first intermediate part, and the second side channel part has a longitudinal side area that is substantially identical to the second longitudinal side zone of the intermediate part, in such a way that the first longitudinal side zone can at least partially overlap the longitudinal side area of the second side channel part, while the at least one rib of the second side channel part projects into the at least one groove of the intermediate part, and the first side channel part has a longitudinal side area that is substantially identical to the first longitudinal side zone of the intermediate part, in such a way that the longitudinal side area of the first side channel part can at least partially overlap the second longitudinal side zone, while the at least one rib of the intermediate part projects into the at least one groove of the first side channel part.

Put differently and more briefly, the present invention provides a weatherproofing assembly for weatherproofing between tiles on a tile roof, comprising:
- a first side channel part,
- a second side channel part, and
- at least one substantially rectangular intermediate part that can be placed between the side channel parts, the one longitudinal side zone of the intermediate part being provided with longitudinal grooves on the underside, and the longitudinal side zone lying opposite being provided on the top side of the intermediate part with one or more longitudinal ribs fitting into said grooves, and the first side channel part having a longitudinal side zone which is formed substantially identically to the one longitudinal side zone of the intermediate part, while the second side channel part has a longitudinal side zone which is formed substantially identically to the other longitudinal side zone of the intermediate part.

In this way it is ensured that, depending on the dimensions of the panel or panels to be recessed between the roof tiles, one or more intermediate parts is/are placed transversely to the direction of slope, which in the case of several intermediate parts in each case connect to each other with more or less complementarily formed longitudinal side zones fixed in a mutually overlapping arrangement in the transverse direction of the roof, and it is also ensured that the sides of the panels to be recessed between the roof tiles, which sides run in the direction of slope, are then closed off with a first and second side channel part respectively. The first and second side channel parts in this case connect to the adjoining roof tiles in the usual manner.

Such an assembly can be placed quickly and efficiently on the roof. The so-called intermediate parts can be of standard dimensions which match the standard dimensions of the panel or panels module to be fitted at least partially recessed between the roof tiles, while the side channel parts can have dimensions that are selected depending on the type of roof tile or, to put it better, depending on the dimensions of the tiles that are on the roof. In this case it is then possible, if desired, to provide a range of side channel parts in different dimensions, in particular different spanning dimensions running in a direction transversely to the slope of the roof.

When in particular several intermediate parts are used, it is preferable according to the invention if the bottom sheet face of the first longitudinal side zone lies flush with or higher than, preferably flush with, the top sheet face of the second longitudinal side zone. In this way it is ensured that in the overlap region, where the ribs of the one intermediate part project from below into the grooves of the other intermediate part, the intermediate part lying above in said overlap region is not subjected to bending loads outside the overlap region if it is otherwise lying on a relatively flat base, as is generally the case when held clamped by tile battens.

For the same reason, it is preferable if the bottom sheet face of the longitudinal side area of the first side channel part lies a sheet thickness or more of the second longitudinal side zone, preferably that sheet thickness, higher than the first sheet face of the first side zone part outside that longitudinal side area.

In order to ensure that, viewed transversely to the direction of slope of the roof, shifting of intermediate parts relative to each other or of side zone parts relative to an intermediate part is precluded entirely, it is of great advantage in the case of a weatherproofing assembly according to the invention if, on the one hand, at least one groove of said at least one groove in the first longitudinal side zone and the longitudinal side area of the first side channel part is a retaining groove and, on the other hand, at least one rib of said at least one rib in the second longitudinal side zone and the longitudinal side area of the second side channel part is a retaining rib, the retaining groove and retaining rib having an internal and external transverse cross-sectional profile respectively which, viewed at any rate in the transverse direction of the intermediate part, can form a groove-rib pair fitting into each other in an interlocking manner.

According to a further embodiment of the weatherproofing assembly according to the invention, it is particularly of great advantage if at least two retaining grooves are provided in the longitudinal side zone and/or the longitudinal side area of the first side channel part. In this way adjustability of the span distance of the weatherproofing assembly, viewed transversely to the direction of slope, is achieved, since in each case a respective retaining rib can be made to engage in the one or the other retaining groove.

In order to provide for a reliable moisture barrier extending in the direction of slope of the roof in an overlap area where one or more ribs engage in one or more grooves, it is of great advantage in the case of the weatherproofing assembly according to the invention if the first longitudinal side zone and the longitudinal side area of the first side channel part each have at least two of said grooves running parallel to each other at a set pitch distance, the second longitudinal side zone and/or the longitudinal side area of the second side channel part comprising on the free longitudinal side a raised longitudinal edge which forms a further rib of said at least one rib, and if said longitudinal edge is provided at approximately the set pitch distance from the first rib of the at least one retaining rib, in such a way that, if the retaining rib is lying in one of the retaining grooves, the raised longitudinal edge is lying free in another groove. The fact that the raised longitudinal edge lies free in another groove ensures that in the overlap area water or moisture would not be able still to pass through the overlap area as a result of capillary action. As known as such, capillary action of that kind could in fact occur if two flat sheet faces are lying flat against each other. By now providing the underlying sheet part in the overlap area with a free-lying raised longitudinal edge, it is ensured that any moisture which may pass through the overlap area as a result of capillary action can still be drained downwards in the direction of slope of the roof without passing the free-lying raised edge. A sort of drainage channel for such moisture has thus been created.

In order to ensure that along the top side of the weatherproofing assembly the gap - also called the join gap - between the top edge of the panel or panels module to be recessed at least partially between the roof tiles and the bottom edge of the roof tiles abutting there can be kept relatively small, in the case of a weatherproofing assembly according to the invention it is preferable if on the top surface the intermediate part is provided with a supporting rib which extends in the transverse direction, at a distance of 12 to 25 cm, such as approximately 20 cm, from the top transverse side, and on which one or more tiles can come to rest with a bottom edge. It should otherwise be pointed out that the provision of such a supporting rib is also very suitable for use in the case of conventional weatherproofing sections or weatherproofing assemblies. According to a further aspect, the invention therefore also relates to a weatherproofing section or weatherproofing assembly which is provided on its top surface with a supporting rib which extends in the transverse direction, at a distance of 12 to 25 cm, such as approximately 20 cm, from the top transverse side of the weatherproofing section or weatherproofing assembly, and on which one or more tiles can come to rest with a bottom edge. As should be clear, the measure of providing such a supporting rib should also be regarded as an invention in its own right, entirely independently of what has been described above.

In the case of the weatherproofing assembly according to both the first and the second aspect of the invention, it is further advantageous if the first side channel part and/or the second side channel part is/are respectively provided with a supporting rib which extends in the transverse direction, at a distance of 12 to 25 cm, such as approximately 20 cm, from the top transverse side, and on which one or more tiles can come to rest with a bottom edge.

The supporting rib described above has the advantage that the row of roof tiles directly adjoining the top side can, if desired, be supported on the supporting rib, instead of on a tile batten in the conventional manner. The advantage of this is that if the so-called join gap exceeds a certain size, another row of tiles can be placed in the join gap, which row of tiles will then for the most part, or at any rate for a greater part than in the case of ordinary material laid on the roof, be pushed underneath the row of tiles lying above it.

In the case of the assembly according to the invention, the intermediate part and/or the first side channel part and/or the second side channel part can be moulded from plastic.

According to a third aspect, the invention further relates to an assembly according to the invention in combination with a solar collector system and/or photovoltaic system.

According to a fourth aspect, the invention also relates to the use of a weatherproofing assembly according to the first and/or second aspect of the invention for weatherproofing a solar collector system and/or photovoltaic system.

The invention will be explained in greater detail below with reference to an exemplary embodiment illustrated diagrammatically in the drawing, in which:
Fig. 1 shows a diagrammatic perspective view of an assembly of four solar collector panels placed largely recessed between the tiles on a tile roof by means of a weatherproofing assembly according to the invention;
Fig. 2 shows a cross section of a weatherproofing assembly according to the invention, taken transversely to the direction of slope of the roof, which weatherproofing assembly is mounted in a first adjustability position;
Fig. 3 shows a view corresponding to that of Fig. 2, but in which the weatherproofing assembly is mounted in a second adjustability position;
Fig. 4 shows a cross-sectional view, taken transversely to the direction of slope of a roof, showing as a detail the connection of a first intermediate part to a second intermediate part;
Fig. 5 shows a diagrammatic cross-sectional view, taken parallel to the longitudinal direction of the roof, showing as a detail the top side of the weatherproofing assembly according to the invention with a relatively larger join gap;
Fig. 6 shows a view corresponding to that of Fig. 5, but in this case with a relatively smaller join gap.

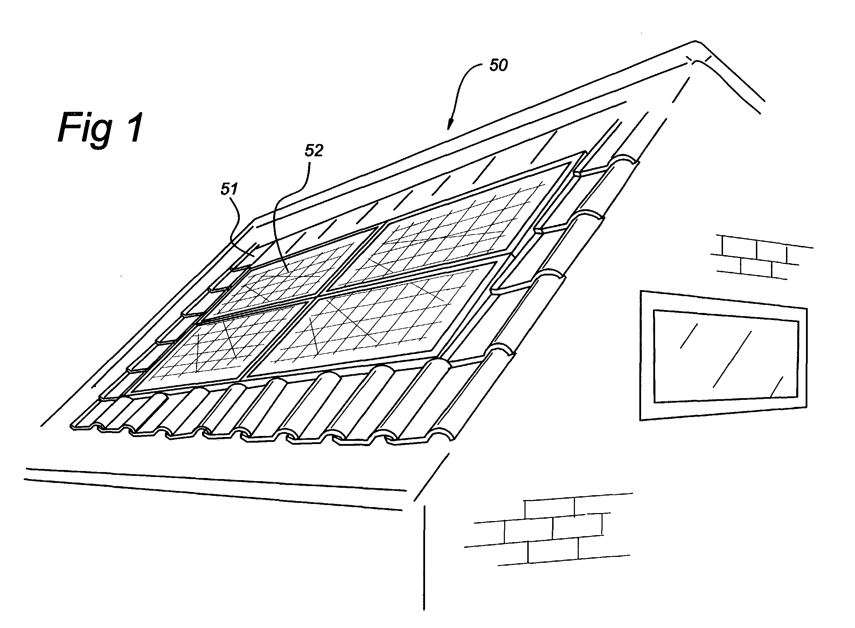

Fig. 1 shows diagrammatically and in perspective a roof of a house covered with roof tiles 51. Four so-called solar hot-water panels 52 are further recessed between the roof tiles. Roof tiles 51 are not present at the position where the solar hot-water panels 52 are provided. However, as should be clear, it is still important for the roof to be windproof, and in particular waterproof. In order to achieve this, as already known per se from the prior art, many different kinds of measures, so-called weatherproofing means, are used. Fitting such weatherproofing means on the roof in practice is labour-intensive and thus time-consuming, and it is also tricky in practice to ensure a neat join of the roof tiles 51 to the panels 52 all the way around. This last problem is due to the fact that in practice the roof tiles have very widely varying dimensions.

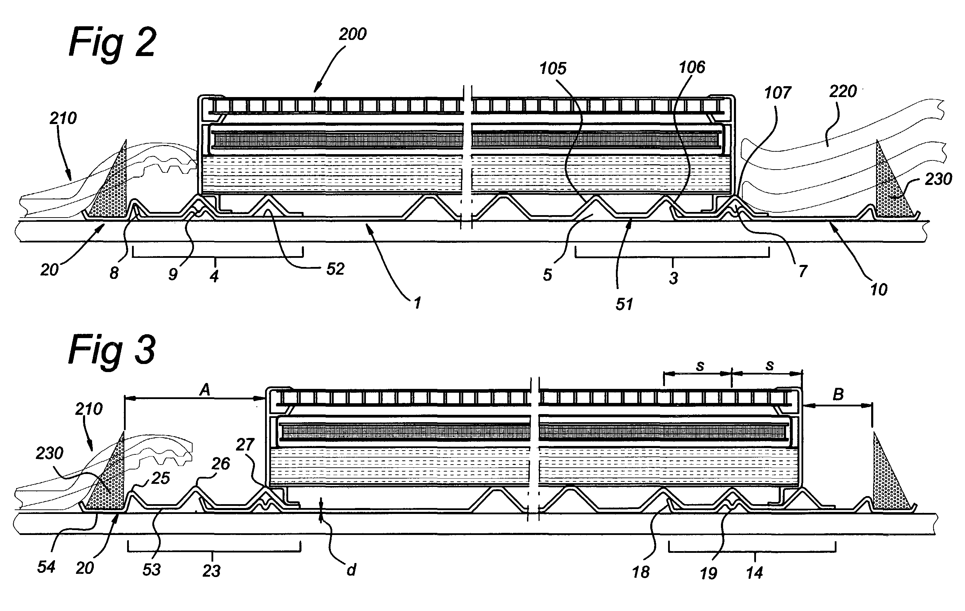

The weatherproofing assembly according to the invention, to be illustrated in greater detail with reference to Figs. 2 to 6, in the embodiment illustrated has a number of advantages. These advantages are, inter alia:
- the weatherproofing assembly is of a modular design and is therefore simple and quick to place on the roof, in order to obtain a waterproof sheathing behind the panel to be placed on it;
- the length of the weatherproofing assembly in a direction running transversely to the direction of slope of the roof can be matched in a simple manner to the distance to be spanned in that direction as a result of the removal or absence of roof tiles;
- the dimensions of the weatherproofing assembly in the direction of slope of the roof can be adapted in a simple manner depending on whether circumstances require it.

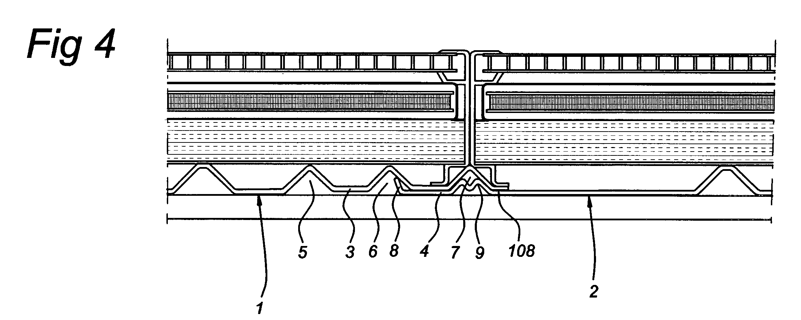

Fig. 2 shows in a cross-sectional view, viewed transversely to the direction of slope of the roof, a weatherproofing assembly according to the invention composed of three parts. The weatherproofing assembly illustrated comprises an intermediate part 1, a first side channel part 20 and a second side channel part 10. The intermediate part 1 is substantially composed of a sheet part that is rectangular in top view and has two longitudinal side zones extending in the direction of slope of the roof, viz.: a first longitudinal side zone 3 and a second longitudinal side zone 4, situated opposite it. The first longitudinal side zone 3 is provided on the underside with three grooves 5, 6 and 7, extending in the longitudinal direction, in other words the direction of slope of the roof. Said grooves 5, 6 and 7 in fact form the hollow side of three sheet ribs 105, 106 and 107 respectively, formed in the intermediate part 1. The second longitudinal side zone 4, lying opposite the first longitudinal side zone 3, is provided on the top side with two ribs 8 and 9. As shown in Fig. 4, which illustrates a detail of a cross section of two adjoining intermediate parts 1 and 2, taken transversely to the direction of slope of the roof, the grooves 5, 6 and 7, on the one hand, and the ribs 8 and 9, on the other hand, are provided with such mutual spacing that the first longitudinal side zone 3 of the first intermediate part 1 can fully or partially overlap the second longitudinal side zone 4 of the second intermediate part 2, which is substantially identical to the first intermediate part, while the ribs 8 and 9 of the second intermediate part project into the grooves 6 and 7 of the first intermediate part. As should be clear, the ribs 8 and 9 can also project into the grooves 5 and 6 respectively, and it is likewise conceivable for only the rib 8 to project into the groove 7. Three mutual positions of engagement between the first intermediate part and the second intermediate part are thus possible. If in particular the number of grooves (5, 6 and 7) is increased, then more positions of engagement are possible. If during the engagement the rib 9 lies in groove 6 or 7, then the intermediate parts 1 and 2 will be fixed relative to each other in the transverse direction, since the cross-sectional profile of the rib 9 fits in an interlocking manner into groove 7 and likewise into groove 6 in the transversely extending direction of the intermediate parts. The rib 9 here forms a so-called retaining rib. By making the rib 9 fit not entirely in an interlocking manner into the groove 7, but making it shorter on the top side and preferably even providing it with a channel (in Figs. 2, 3 and 4 the rib 9 is clearly the shape of an inverted W), it becomes possible to drain downwards along the slope of the roof moisture that has crept in along the rib 9 by way of the contact face 108 as a result of, for example, capillary action. In addition to such a W-shaped rib 9 or possibly the placing of such a W-shaped rib 9, the rib 8 is designed as a raised edge that lies substantially free in the groove 6. The raised edge thus provides a channel wall, for the purpose of draining along the slope of the roof moisture that, as a result of the earlier mentioned capillary action, may have crept through between the overlap area of the intermediate part 1 and intermediate part 2.

Returning to Fig. 2, the weatherproofing assembly according to the invention further comprises a first and a second side channel part 20 and 10 respectively. The first side channel part 20 has a longitudinal side area 23 that is substantially identical to the first longitudinal side zone 3 of the intermediate part 1. All the above is likewise such that the longitudinal side area 23 of the first side channel part 2 can at least partially overlap the second longitudinal side zone 4 of the intermediate part, while at least one of the ribs 8, 10 of the intermediate part projects into one or more of the grooves 25, 26, 27 of the first side channel part. The grooves 25, 26 of the first side channel part in fact correspond to the grooves 5, 6 and 7 of the intermediate part. Fig. 2 shows the first side channel part 20 in a first fixing position or adjustability position, which is used if the laterally adjoining roof tiles are lying close to the panel 200 concerned. If the adjoining roof tiles 210 are lying further away from the panel 200, a greater distance has to be bridged between the panel 200 and said adjoining roof tiles 210, and the first side channel part will be situated in a second adjustability position, in which a greater span width A is bridged.

In a manner comparable to that in the case of the first side channel part, the second side channel part has a longitudinal side area 14 that is substantially identical to the second longitudinal side zone 4 of the intermediate part 1, in such a manner that the first longitudinal side zone 3 of the intermediate part can overlap the longitudinal side area 14 of the second side channel part in the engagement of one or more ribs 18, 19 of the second side channel part in one or more of the grooves 5, 6 and 7 of the intermediate part. In this case the ribs 18, 19 of the second side channel part are substantially comparable, if not identical to the ribs 8 and 9 of the intermediate part. As shown with reference to Figs. 2 and 3, the possibility is also provided here for the second side channel part to be mounted in a second adjustability position with a relatively smaller span distance B (see Fig. 3) and a first adjustability position (see Fig. 2) with a relatively greater span distance B.

The first side channel part and the second side channel part on their side facing away from the longitudinal side area 23 and longitudinal side area 14 respectively are provided with a strip of foam material 230 extending in the longitudinal direction of the side channel part concerned. Said foam material 230 will be easily pressed down by a roof tile lying on top of it and will close up well against the underside of said roof tile.

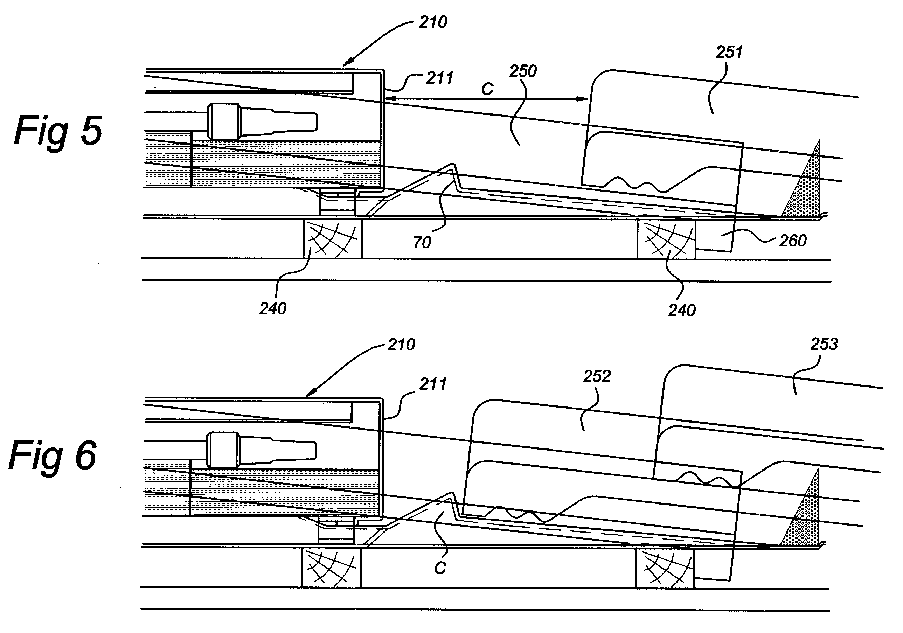

With reference to Figs. 5 and 6, which shows in detail in cross section along the direction of slope of the roof the top part of the weatherproofing assembly according to the invention, it will be explained in greater detail below how the join gap on the top side of a panel to be weatherproofed can be minimized according to the invention. It will be clear that, by correct positioning on the roof in that way, the join gap on the underside of a panel to be weatherproofed can also be minimized. As a matter of fact, as will probably yet become clear, in order to achieve this, the entire weatherproofing assembly need only be pushed further downwards or further upwards.

Figs. 5 and 6 again show a weatherproofed panel indicated by 210. Reference numeral 240 indicates so-called tile battens, which serve to keep roof tiles 250 supported on the roof. To that end, the roof tiles 250 engage by means of lugs 260 on the face of the tile batten 240 facing the lug. As should be clear, the tile 250 illustrated runs alongside the panel 210. Said tile 250 therefore does not lie above the panel 210, but just beside it. However, as should be clear from the length of the tile 250, all the above means that a join gap C arises at the top edge 211 of the panel 210, between said top edge 211 and the bottom edge of the row of roof tiles 251 lying above. If this gap C becomes very large, it will become very noticeable and mar the appearance of the roof. For these reasons, it is preferable for the gap C to be kept as small as possible. However, the problem here is that, as illustrated with reference to the roof tile 250, the tiles are actually too long. Shortening the roof tiles 250 on the underside is time-consuming and, besides, it is not always all that easy to do this shortening neatly. The present invention now provides for the weatherproofing assembly, in particular its intermediate parts, but possibly also its first and/or second side channel part, to be furnished with a stop lug 70 on the top side. It then becomes possible for a roof tile 252 adjoining the top edge 211 of the panel 210 to rest against the lug 70, in which case it is then no longer necessary for the lug 260 on the roof tile 252 to engage behind a tile batten. A very large part of this roof tile 252 can be pushed underneath the roof tile 253 lying above it.

## Claims

1. Weatherproofing assembly for weatherproofing between tiles on a tile roof, comprising:
■ a first side channel part (20),
■ a second side channel part (10), and
■ at least one intermediate part (1, 2) that can be placed between the side channel parts,
in which the intermediate part (1, 2) is a substantially rectangular sheet part with a first longitudinal side zone (3) and a second longitudinal side zone (4) lying opposite it, the first longitudinal side zone (3) being provided on the underside with at least one groove (5, 6, 7) extending in the longitudinal direction, and the second longitudinal side zone (4) being provided on the top side with at least one rib (8, 9), and all the above being provided in such a way that the first longitudinal side zone (3) of a first intermediate part (1) can at least partially overlap the second longitudinal side zone (4) of a second intermediate part (2), substantially identical to the first intermediate part (1), while the at least one rib (8, 9) of the second intermediate part (2) projects into the at least one groove (5, 6, 7) of the first intermediate part (1),
in which the second side channel part (10) has a longitudinal side area (14) that is substantially identical to the second longitudinal side zone (4) of the intermediate part (1, 2), in such a way that the first longitudinal side zone (3) can at least partially overlap the longitudinal side area (14) of the second side channel part (10), while the at least one rib (18, 19) of the second side channel (10) part projects into the at least one groove (5, 6, 7) of the intermediate part (1), and
in which the first side channel part (20) has a longitudinal side area (23) that is substantially identical to the first longitudinal side zone (3) of the intermediate part (1, 2), in such a way that the longitudinal side area (23) of the first side channel part (20) can at least partially overlap the second longitudinal side zone (4), while the at least one rib (8, 9) of the intermediate part (1, 2) projects into the at least one groove (25, 26, 27) of the first side channel part (20).

2. Weatherproofing assembly according to Claim 1, in which the bottom sheet face (51) of the first longitudinal side zone (3) lies flush with or higher than, preferably flush with, the top sheet face (52) of the second longitudinal side zone (4).

3. Weatherproofing assembly according to one of the preceding claims, in which the bottom sheet face (53) of the longitudinal side zone (23) of the first side channel part (20) lies a sheet thickness (d) or more of the second longitudinal side zone (4), preferably that sheet thickness (d), higher than the bottom sheet face (54) of the first side channel part (20) outside that longitudinal side area (23).

4. Weatherproofing assembly according to one of the preceding claims, in which, on the one hand, at least one (6, 7 or 26, 27) of said at least one groove (6, 7, 8 or 26, 27, 28) in the first longitudinal side zone (3) and the longitudinal side area (23) of the first side channel part (20) is a retaining groove (6, 7 or 26, 27) and, on the other hand, at least one rib of said at least one rib (8, 9 or 18, 19) in the second longitudinal side zone (4) and the longitudinal side area (14) of the second side channel part (10) is a retaining rib (9 or 19), the retaining groove and retaining rib having an internal and external transverse cross-sectional profile respectively which, viewed at least in the transverse direction of the intermediate part (1, 2), can form a groove-rib pair fitting in an interlocking manner into each other, which when inserted into each other, viewed in the transverse direction of the intermediate part (1, 2), impedes shifting of the groove (6, 7 or 26, 27) relative to the rib (9 or 19).

5. Weatherproofing assembly according to Claim 4, in which at least two retaining grooves (6, 7 or 26, 27) are provided in the longitudinal side zone (3) and/or the longitudinal side area (23) of the first side channel part (20).

6. Weatherproofing assembly according to Claim 4 or 5, in which the first longitudinal side zone (3) and the longitudinal side area (23) of the first side channel part (20) each have at least two of said grooves running parallel to each other at a set pitch distance (s), the second longitudinal side zone (4) and/or the longitudinal side area (14) of the second side channel part (10) comprising on the free longitudinal side a raised longitudinal edge which forms a further rib of said at least one rib, and in which said longitudinal edge is provided at approximately the set pitch distance (s) from the first rib of the at least one retaining rib, in such a way that, if the retaining rib is lying in one of the retaining grooves, the raised longitudinal edge is lying free in another groove.

7. Weatherproofing assembly according to one of the preceding claims, in which on the top surface the intermediate part is provided with a supporting rib which extends in the transverse direction, at a distance of 12 to 25 cm, such as approximately 20 cm, from the top transverse side, and on which one or more tiles can come to rest with their bottom edge.

8. Weatherproofing assembly according to one of the preceding claims, in which on the top surface the first side channel part and/or the second side channel part is/are provided with a supporting rib which extends in the transverse direction, at a distance of 12 to 25 cm, such as approximately 20 cm, from the top transverse side, and on which one or more tiles can come to rest with their bottom edge.

9. Assembly according to one of the preceding claims, in which the intermediate part and/or the first side channel part and/or the second side channel part are moulded from plastic.

10. Assembly according to one of the preceding claims, in combination with a solar collector system and/or photovoltaic system.

11. Use of a weatherproofing assembly according to one of the preceding Claims 1 - 9 for weatherproofing a solar collector system and/or photovoltaic system.
